# EUROPÄISCHE PATENTSCHRIFT

(11) **EP 0 353 556 B1**
(45) Veröffentlichungstag und Bekanntmachung des Hinweises auf die Patenterteilung: **31.03.1993**
(21) Anmeldenummer: 89113415.7
(22) Anmeldetag: 21.07.1989
(51) Int. Cl.: B65G 1/04

(54) **Vorrichtung zur Einlagerung von Langgut**
Device for storing elongate articles
Dispositif pour le stockage d'objets de grande longueur

(30) Priorität: 28.07.1988 DE 3825570
(43) Veröffentlichungstag der Anmeldung: 07.02.1990
(73) Patentinhaber: TEPORA Transportsysteme Entwicklungs-GmbH, D-74348 Lauffen (DE)
(72) Erfinder: Potocnjak, Tomislav, D-7128 Lauffen a. N. (DE)
(74) Vertreter: Jackisch, Walter

(56) Entgegenhaltungen:
- DE-A- 2 243 107
- DE-A- 3 306 673
- FR-A- 2 400 869

## Beschreibung

Die Erfindung betrifft eine Vorrichtung zur Einlagerung von Langgut, beispielsweise Rohren, Stangen oder dgl., in einem Regal, das eine Vielzahl von Aufnahmeräumen für Langgut umfaßt, mit einem fahrbaren Aufnahmewagen, der von der Stirnseite her in die Aufnahmeräume des Regals mittels einer Antriebseinrichtung einfahrbar ist.

Bei einer bekannten Vorrichtung dieser Art (DE-A-3 306 673) weist die Regalanordnung Aufnahmefächer mit zugeordneten, verschiebbaren Aufnahmewagen sowie einen hiervon gesonderten Be- und Entladewagen auf. Dieser ist an der Öffnungsseite der Aufnahmefächer quer zu diesen verfahrbar und hat eine höhenverstellbare Plattform, die zu den einzelnen Aufnahmefächern zwecks Übernahme des Aufnahmewagens ausgerichtet werden kann. Der Be- und Entladewagen läuft mittels Laufrollen auf Schienen oder in einer vertieften Spur und ist somit schienen- bzw. fahrspurgebunden. Die bekannte Ausführung ist überdies konstruktiv außerordentlich aufwendig und ungeeignet, langes Gut, wie beispielsweise Rohre, Stangen oder dgl., ohne Benutzung von Fahrspuren bzw. Schienen zu transportieren.

Eine andere bekannte Vorrichtung (DE-A-2 243 107) betrifft einen Palettenwagen zur Beschickung eines Hochregallagers mit einem Regalbedienungsgerät und einer vor dem Hochregallager verfahrbaren Hebebühne. Der Palettenwagen ist in Schienen verfahrbar, die sowohl in der Hebebühne als auch in einzelnen Regalfächern verlegt sind, und weist seitlich Raupenketten auf, um auch bei unexakter Ausfluchtung der Schienen im Hochregal und in der Hebebühne zwischen diesen Schienen leichter verfahrbar zu sein, selbst wenn dabei zwischen den Schienen größere Abstände zu überbrücken sind.

Der Erfindung liegt die Aufgabe zugrunde, eine Vorrichtung mit den Merkmalen des Gattungsbegriffes so auszubilden, daß Profilschienen zum Einfahren des das Langgut aufnehmenden Aufnahmewagens nicht mehr erforderlich sind und somit eine individuell konstruktive Anpassung des Aufnahmewagens und des Regales nicht mehr notwendig wird, so daß die Regale einfacher, gewichtsmäßig leichter und damit billiger hergestellt werden können.

Diese Aufgabe wird bei einer Vorrichtung der gattungsgemäßen Art mit den Merkmalen des kennzeichnenden Teils des Anspruches 1 gelöst.

Dadurch daß der Aufnahmewagen als wannenartiger, stirnseitig offener Behälter ausgebildet ist, der zum Transport des Langgutes mit Raupenketten ausgerüstet ist, die über endseitige Kettenräder umgelenkt sind, kann dieser in allen herkömmlichen Regalen verwendet werden, ohne daß besondere, der Spurbreite des Behälters angepaßte Fahrschienen vorhanden sein müssen. Demgemäß ist die Anordnung besonderer L- und U-förmig profilierter Führungsschienen in den Regalen nicht mehr erforderlich; der wannenartig ausgebildete, mit Raupenketten versehene Aufnahmewagen kann somit auch in bereits vorhandene Regale eingefahren werden, die lediglich durch vertikale Ständer und diese verbindende und versteifende horizontale Querholme gebildet sind, sofern die Breite der einzelnen übereinander- und nebeneinanderliegenden Aufnahmeräume der Regale genügend groß ist. Infolge der erfindungsgemäßen Ausbildung kann eine ausreichende Abstützung bei Regalen bereits durch zwei Querstege gegeben sein, wenn diese einen zur Länge des mit Raupenketten versehenen Behälters entsprechenden Abstand voneinander haben. Ein weiterer Vorteil liegt darin, daß durch die erfindungsgemäße Ausbildung nebeneinander mehrere mit Raupenketten versehene wannenartige Behälter in entsprechend breit ausgebildete Aufnahmeräume eingefahren werden können. Da weiterhin eine Antriebsvorrichtung für den fahrbaren Behälter auf dem Behälter selbst angeordnet ist und das Langgut auf Querrollen im Behälter auflagert, wird auch bei tonnenschwerem Langgutmaterial eine leichte Be- und Entladung sowie ein einfacher, müheloser Transport des Langgutes gewährleistet.

Um eine möglichst lange Lauffläche zu schaffen, ist es vorteilhaft, die Kettenräder jeweils in den Endbereichen der Wandteile zu lagern und zwischen vorderem und hinterem Kettenrad eines Wandteiles Gleitschienen und/oder Führungsrollen für die Raupenkette vorzusehen. Die Ausführung mit Führungsrollen hat geringe Reibkräfte, wohingegen eine solche mit Gleitschienen kostengünstiger ist.

Nach einer bevorzugten Ausgestaltung der seitlichen Wandteile ist deren unterer Abschnitt als nach unten offenes Führungsprofil ausgestaltet, das die Raupenkette führt und aus dem die Raupenkette mit ihrer Lauffläche herausragt.

Diese Anordnung trägt nicht nur zur erhöhten Stabilität und Verwindungssteifigkeit des wannenförmigen Behälters bei, sondern dient auch der exakten Führung der Raupenkette und damit der gezielten Positionierung des Behälters in die Aufnahmeräume.

Die Antriebsvorrichtung kann nach einer weiteren Ausbildung mit Mitteln ausgerüstet werden, die einen synchronen Antrieb beider Raupenketten gewährleisten. Verschiedene Ausführungen hierfür sind möglich; eine kann darin bestehen, daß ein mit zwei Wellenenden ausgerüsteter Motor auf die Kettenräder wirkt oder daß ein mit einer Antriebswelle ausgestatteter Antriebsmotor über eine Verbindungswelle beide Raupenketten gleichmäßig beaufschlagt. Kommt ein Antriebsmotor mit niedriger Drehzahl zum Einsatz, um den Behälter mit angemessener Geschwindigkeit zu bewegen, können ein Untersetzungsgetriebe und der Motor direkt mit den Kettenrädern gekoppelt sein. Eine Ausführungsvariante der Antriebseinrichtung besteht auch darin, daß ein Antriebsmotor unter Zwischenschaltung von Reibrädern auf die Laufflächen der Raupenkette wirkt. Auch hier ist es zweckmäßig, beide Raupenketten synchron kraftzubeaufschlagen, was zweckmäßigerweise dadurch erreicht wird, daß zwei gleiche Reibräder, von denen jeweils eines mit einer Raupenkette zusammenwirkt, über eine Welle miteinander verbunden sind, und diese Welle oder eines der Reibräder vom Motor angetrieben wird.

Bekanntlich wird der Kommissioniervorgang dadurch beendet, daß das Langgut in dem vorgesehenen Aufnahmeraum auf den Querträgern abgelagert wird. Das Entfernen des Langgutes aus dem Behälter und Ablagern auf den Querträgern kann beispielsweise dadurch geschehen, daß ein Schieber vorhanden ist, der die innere Querschnittsform des Behälters aufweist und relativ zu dem Behälter bewegbar ist, so daß beim Ausfahren des Behälters aus einem Aufnahmeraum das Langgut auf den Querrollen aus dem Behälter herausgerollt wird.

Je nach Länge des Behälters ist die Anzahl der Querrollen zu bemessen. Es hat sich herausgestellt, daß bei handelsüblichen Abmessungen von Langgut, die etwa 6 m bis 7 m betragen, mindestens fünf Querrollen, vorzugsweise jedoch sieben Querrollen vorzusehen sind. Diese Querrollen sollen den gleichen Durchmesser aufweisen und in annähernd gleichen Abständen über die Länge des Behälters verteilt angeordnet sein. Zum Austragen des Langgutes ist es besonders zweckmäßig, daß zumindest ein Teil der Gesamtzahl der Querrollen antreibbar ist, so daß durch die Drehbewegung der Rollen das Langgut aus dem Behälter ausgefahren wird. Diesbezüglich ist es von besonderem Vorteil, daß die Querrollen mi einem Ketten- oder Treibrad versehen sind, über die eine Förderkette oder ein Treibriemen gespannt ist. Damit ein exakter Bewegungsablauf garantiert ist, der nicht infolge sich ändernden Schlupfs zu Abweichungen im Bewegungsablauf führt, ist es zweckmäßig, daß die Raupenketten, die Förderkette und/oder der Treibriemen mit Spannmitteln versehen sind, die vorzugsweise als Spannrollen ausgestaltet sind.

Je nach Ausgestaltung der seitlichen Wandteile kann es sein, daß die Antriebsmittel für die Querrollen nicht innerhalb der seitlichen Wandteile untergebracht werden können. Es wird daher vorgeschlagen, daß eine an einem der seitlichen Wandteile befestigte Abdeckung vorgesehen ist, die die Antriebsmittel der Querrollen überdeckt. Besonders zweckmäßig ist es, daß die Abdeckung in geringem Abstand über den Querrollen verläuft und im Bereich zwischen den Querrollen nach unten ragende Abschnitte besitzt. Auf diese Weise ist sichergestellt, daß das Beladen des Behälters mit Langgut ohne besondere Vorsichtsmaßnahmen möglich ist und die Antriebsmittel für die Querrollen mit Sicherheit vor jeglicher Beschädigung geschützt sind.

Eine besonders bevorzugte Ausgestaltung des Antriebs der Querrollen besteht darin, daß die Förderkette über ein Antriebskettenrad gespannt ist, das gemeinsam mit einem der Kettenräder der Raupenketten auf einer Welle gelagert, aber unabhängig von dieser antreibbar ist. Dieses unabhängige Antreiben ist deshalb wichtig, da die Querrollen des Transports des Langguts bis hin zu dem Aufnahmeraum feststehen und erst zum Ablagern des Langgutes in dem dafür vorgesehenen Aufnahmeraum antreibbar sind. Gemäß einer bevorzugten Ausgestaltung der Erfindung ist das Antriebskettenrad über eine Schaltkupplung bedarfsweise dem Kettenrad der Raupenkette zuschaltbar. Dabei kann es sich in geeigneter Weise um eine Klauenkupplung oder um eine ähnliche Kupplungsart, bei der die Kupplungsteile in formschlüssigem Eingriff stehen, handeln.

Eine besonders geeignete Ausgestaltung der Erfindung ist dann gegeben, wenn die Drehrichtung der Querrollen entgegengesetzt der Bewegungsrichtung des Behälters ist, wobei die Geschwindigkeit an der Mantelfläche der Querrollen gleich der Geschwindigkeit des Behälters ist. Auf diese Weise ergibt sich ein relativer Stillstand des Langgutes gegenüber dem Aufnahmeraum des Regals, was gleichzeitig jedoch einer Relativbewegung gegenüber dem Behälter entspricht. Das aus dem Behälter herausragende Langgut wird somit auf den Querträgern im Regal abgelegt und schließlich senkt sich beim Abrollen des Langgutes von der letzten Querrolle das Langgut vollständig hinab auf die Querträger des zugehörigen Aufnahmeraumes.

Die Erfindung wird nachstehend anhand der Zeichnungen näher erläutert; sie zeigen:
- Fig. 1: einen lotrechten Längsschnitt durch eine Lagereinrichtung für Langgut, mit einem Hubwagen und einem darauf befindlichen Behälter mit Langgut,
- Fig. 2: einen Behälter zum Einlegen von Langgut im Schnitt quer zu seiner Bewegungsrichtung,
- Fig. 3.: eine vereinfachte Darstellung eines Schnittes im Bereich eines Querträgers,
- Fig 4a bis Fig. 4c: in drei verschiedenen zeitlichen Abschnitten den Einlagerungsvorgang mit einer Einrichtung gemäß Fig. 2,
- Fig. 5: einen Schnitt durch eine alternative Ausführungsform des Behälters gemäß Fig. 2 im Bereich der Antriebskettenräder,
- Fig. 6: einen Schnitt in einer anderen Ebene des Behälters gemäß Fig. 5 mit angetriebener Querrolle,
- Fig. 7: einen Ausschnitt einer alternativen Ausführung zu Fig. 3,
- Fig. 8: einen Teil einer Seitenansicht des Behälters gemäß Fig. 5 und 6,
- Fig. 9: eine Draufsicht auf einen Teil des Behälters gemäß Fig. 8,
- Fig. 10: einen Schnitt durch den Behälter gemäß Fig. 3 auf der Antriebsseite und
- Fig. 11: eine Ansicht des Behälters gemäß Fig. 8 mit Antriebseinrichtung.

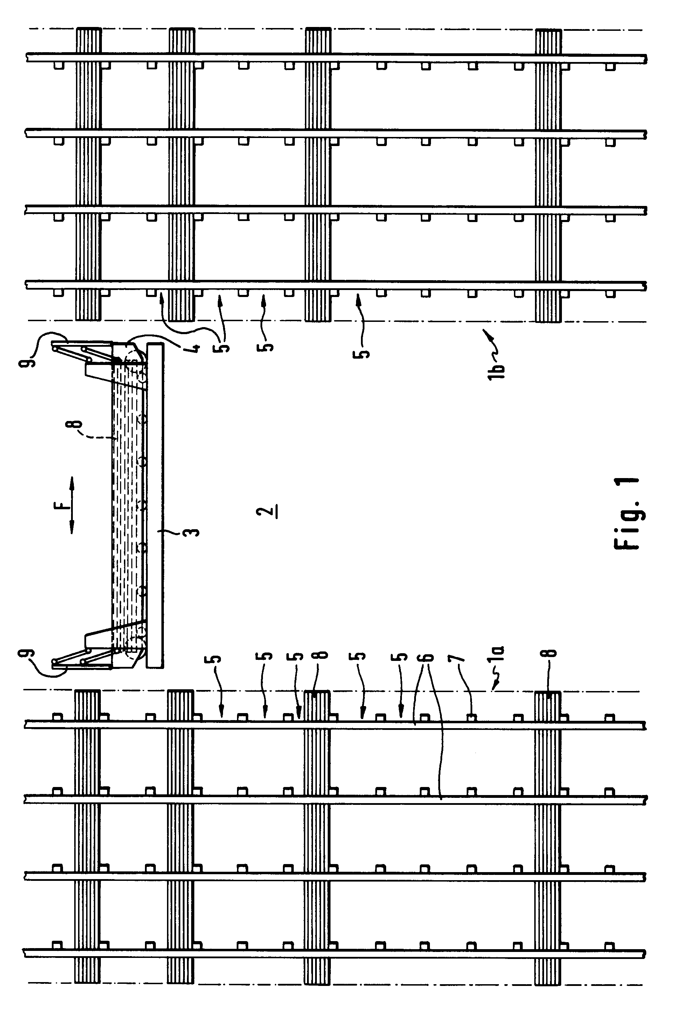

Fig. 1 zeigt den schematischen Aufbau eines Langgutlagers, von dem zwei Regalreihen 1a und 1b mit einem dazwischen befindlichen Gang 2 dargestellt sind. In dem Gang 2 ist eine Hubbühne 3 zwischen den Regalreihen 1a und 1b horizontal und vertikal verfahrbar. Die Hubbühne 3 dient zur Höhenbeförderung eines wannenförmigen Behälters 4 zu den einzelnen übereinanderliegenden und in horizontaler Richtung sich gegenüberliegenden Aufnahmeräumen 5, die durch vertikale Ständer 6 und horizontale Querholme 7 gebildet sind. Die Aufnahmeräume 5 dienen zur Lagerung der verschiedenen Sorten von Langgut 8, wie beispielsweise Stangen, Rohren oder dgl.

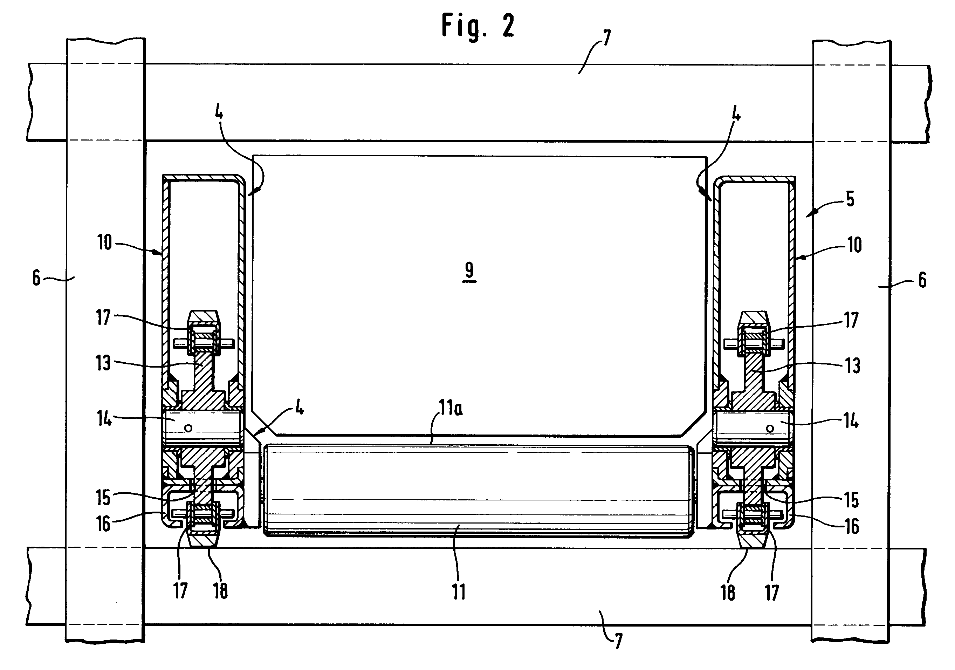

An der Hubeinrichtung 3 sind auf jeder Seite absenkbare Schieber 9 angeordnet, deren Funktion später zu Fig. 2 noch näher erläutert wird. Der Behälter 4 ist mit Raupenketten ausgestattet, durch die das Ein- und Ausfahren des Behälters 4 in Richtung Pfeil F in die Aufnahmeräume 5 möglich ist. Der Aufbau der Vorrichtung wird anhand der weiteren Figuren noch näher beschrieben.

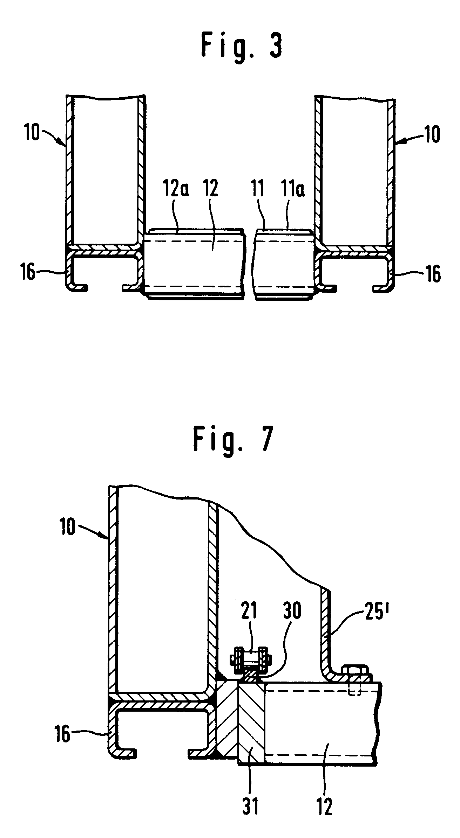

Fig. 2 zeigt einen Schnitt durch einen Behälter 4 zur Aufnahme von Langgut, wobei die Wannenform des Behälters 4 durch die seitlichen Wandteile 10 und die zwischen diesen angeordneten Querrollen 11 gebildet ist. Da die drehbar an den Wandteilen 10 gelagerten Querrollen 11 nicht die erforderliche Steifigkeit des wannenförmigen Behälters 4 erzeugen könnten, sind - wie in Fig. 3 dargestellt - die seitlichen Wandteile 10 über angeschweißte Querträger 12 zu einem formsteifen Rahmen zusammengefügt. Da jedoch die oberen Mantellinien 11a der Querrollen 11 höher liegen als die Oberkanten 12a der Querträger 12 (vgl. Fig. 3) , bilden die Querrollen 11 ein Auflager und damit den Boden des Behälters 4, auf dem das (in Fig. 2 nicht dargestellte) Langgut liegt.

Der im Querschnitt gezeichnete Behälter 4 ist in Fig. 2 so dargestellt, daß er sich in einem Aufnahmeraum 5 des Regals zwischen Ständern 6 und Querholmen 7 befindet. Es ist außerdem ein Schieber 9 in der abgesenkten Stellung dargestellt, durch den das Langgut beim Ausfahren des Behälters 4 aus dem Aufnahmeraum 5 in seiner Position gehalten wird und damit aus dem Behälter 4 auf den Rollen 11 gleitend herausgeschoben wird. In den seitlichen Wandteilen 10 ist jeweils ein Kettenrad 13 auf einer Achse bzw. Welle 14 drehbar gelagert, wobei der untere Teil des Kettenrades 13 eine entsprechende Öffnung 15 im unteren Abschnitt des Wandteiles 10 in ein mit diesem unteren Wandteil verbundenes Führungsprofil 16 ragt. Über die Kettenräder 13 ist jeweils eine endlose Raupenkette 17 gespannt, wobei die Ketten in den Führungsprofilen 16 exakt geführt sind. Die unteren Glieder der Raupenkette 17 ragen auf der Unterseite aus den Führungsprofilen 16 heraus und bilden somit die Lauffläche 18 der Raupenketten 17. Es versteht sich von selbst, daß die Führungsprofile 16 nur im Bereich der Kettenräder 13 die Öffnungen 15 besitzen, im übrigen aber zu den seitlichen Wandteilen hin geschlossen sind, wie dies aus Fig. 2 und 3 ersichtlich ist.

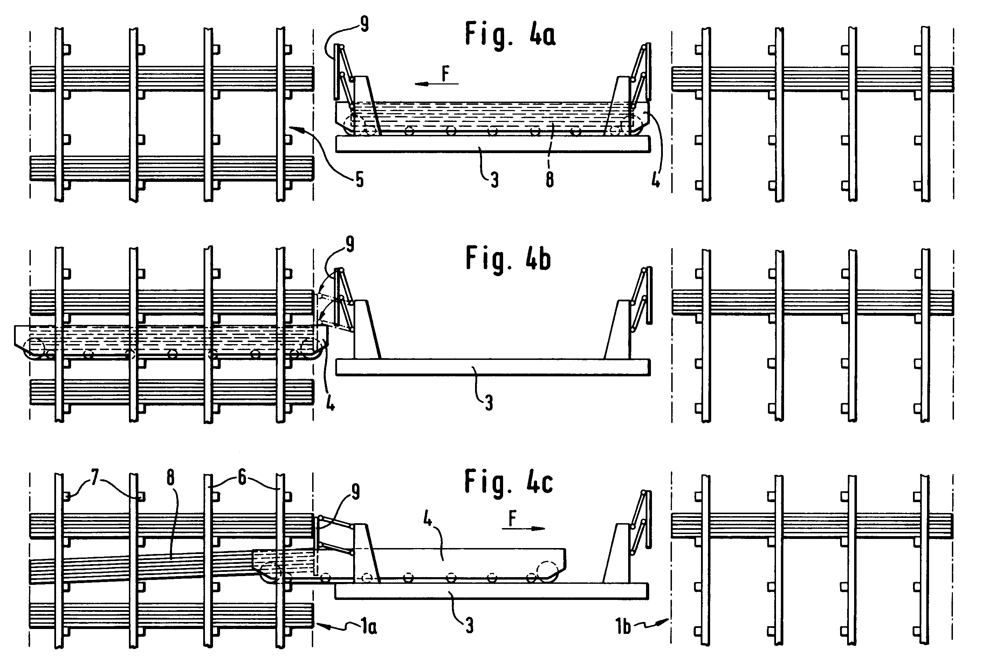

Anhand der Fig. 4a bis 4c wird nunmehr der Kommissioniervorgang und die Betriebsweise des Behälters 4 erläutert. Zunächst wird der Behälter 4, der das Langgut 8 enthält und der sich auf der Hubbühne 3 befindet, in eine Position gebracht, in der der Behälter exakt ausgerichtet vor einem leeren Aufnahmeraum 5 positioniert wird. Ist diese Position erreicht, so wird der Behälter 4, dessen Raupenketten durch eine Antriebsvorrichtung antreibbar sind, vollständig in den Aufnahmeraum 5 hineingefahren, wodurch sich auch das zu kommissionierende Langgut vollständig innerhalb des Aufnahmeraumes 5 befindet. Dieser Vorgang ist in Fig. 4b dargestellt. Der an der Hubbühne 3 angeordnete Schieber 9 wird sodann abgesenkt, so daß sich unter Einhaltung eines geringen Abstandes zu den Querrollen 11 und seitlichen Wandteilen 10 ein stirnseitiges Ende des Behälters 4 verschließt. Bezüglich der Stellung, die der Schieber 9 einnimmt, wird auf die Darstellung in Fig. 2 verwiesen.

Zum Ablagern des Langgutes 8 in dem dafür vorgesehenen Aufnahmeraum 5 wird der Behälter 4 aus dem Aufnahmeraum zurück auf die Hubbühne 3 gefahren, wie dies in Fig. 4c dargestellt ist. Da der abgesenkte Schieber 9 das Langgut 8 in seiner Position festhält, rollt das Langgut von den Querrollen 11 herunter und legt sich auf die Querholme 7 der Regalreihe 1a. Der leere Behälter 4 steht dann für eine weitere Befüllung mit Langgut und den nächsten Kommissioniervorgang zur Verfügung.

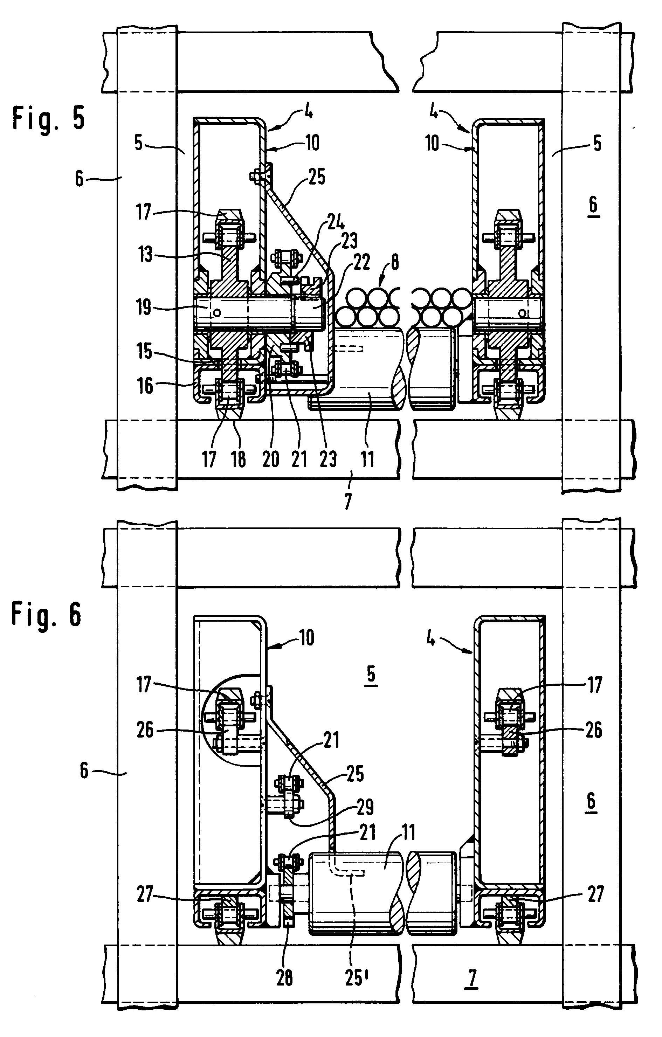

In Fig. 5 ist wiederum ein Schnitt durch einen Behälter 4, der sich in einem Aufnahmeraum 5 befindet, dargestellt, wobei der Schnitt durch die Achsen der Kettenräder geführt ist. Da es sich dabei um eine Darstellung handelt, die in wesentlichen Teilen mit derjenigen in Fig. 2 übereinstimmt, sind für gleiche Teile die Bezugszeichen der Fig. 2 eingesetzt. Zusätzlich ist in Fig. 5 das auf den Querrollen 11 liegende Langgut 8 in Form von Rundstäben dargestellt. Die alternative Ausführungsform der Fig. 5 unterscheidet sich von derjenigen in Fig. 2 dadurch, daß die Querrollen 11 mit einer Antriebsvorrichtung versehen sind durch die die Rollen 11 in Drehung versetzt werden können und damit das Langgut ablagern. Zu diesem Zweck ist das in der Fig. 5 links dargestellte Kettenrad 13 auf eine verlängerten Welle 19 befestigt, die in den Innenraum des Behälters 4 hineinragt. Auf einem Abschnitt dieser verlängerten Welle 19 befindet sich ein Antriebskettenrad 20, das auf der Welle 19 frei laufend gelagert ist. Über das Antriebskettenrad 20 ist eine Förderkette 21 gespannt, die zum bedarfsweisen Antrieb der Querrollen 11 dient. Auf einem Zapfen 22 der Welle 19 ist drehfest, aber axial verschieblich ein Kupplungsteil 23 befestigt, das nach Art einer Klauenkupplung mit in axialer Richtung aus dem Antriebskettenrad 20 hervorstehenden Kupplungsbolzen 24 in Eingriff bringbar ist. In Fig. 5 ist die obere Hälfte des Kupplungsteils 23 in der entkuppelten Stellung und die untere Hälfte 23′ des Kupplungsteils im eingekuppelten Zustand dargestellt. Dieser Antriebsmechanismus für die Querrollen 11 ist mittels einer an das seitliche Wandteil 10 angeschraubten Blechhaube 25 abgedeckt. Diese Blechhaube 25 dient einerseits als Unfallverhütungsschutz und andererseits zum Schutz vor Beschädigung der Antriebsmittel durch das Langgut 8.

Fig. 6 zeigt einen Schnitt durch eine Vorrichtung gemäß Fig. 5, jedoch in einer anderen Ebene, und zwar mehr in der Mitte des Behälters 4. Aus dieser Darstellung ist zu ersehen, daß die Raupenketten 17 sowohl bezüglich der oberen Horizontalbewegung - also ihr Obertrum - als auch der unteren Horizontalbewegung -also ihr Untertrum - an Gleitschienen 26 und 27 geführt sind. Die Gleitschienen 26 verhindern ein Durchhängen der Raupenkette 17 und die Gleitschienen 27 garantieren, daß auch bei Unebenheiten des Untergrundes oder beim Überfahren von Querholmen 7 ein gleichmäßiger Ablauf der Raupenkette gewährleistet ist. Die Querrolle 11 weist an ihrem in Fig. 6 links dargestellten Ende ein Kettenrad 28 auf, das drehfest mit der Querrolle 11 verbunden ist und das von der Förderkette 21 antreibbar ist. Die Förderkette 21 wird, nachdem sie über alle Kettenräder 28 geführt ist, im oberen Teil unter der Blechhaube 25 zurückgeführt, wobei zur exakten Führung der Förderkette 21 Gleitschienen oder Führungsrollen 29 vorgesehen sind. Aus Fig. 6 ist auch ersichtlich, daß die Blechhaube 25 bis dicht über die Querrolle 11 reicht und in dem Bereich zwischen zwei Querrollen 11 einen hinab reichenden Abschnitt 25′ besitzt.

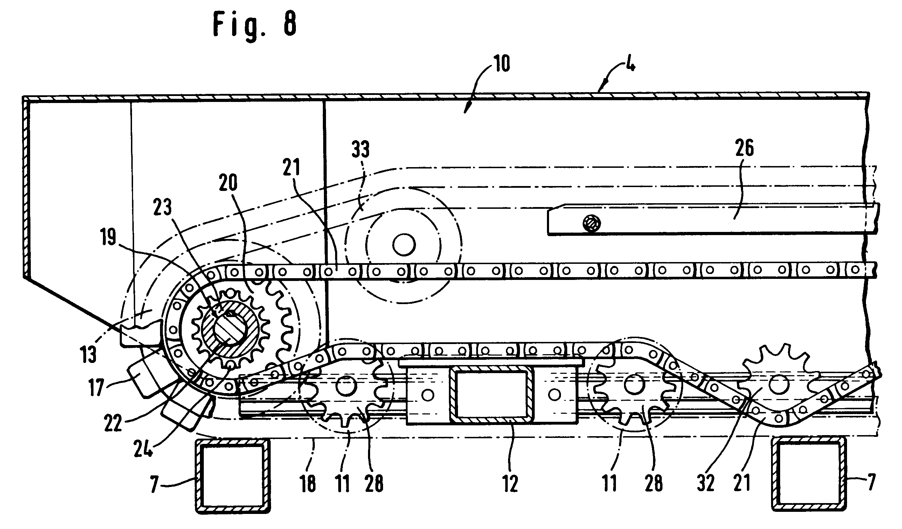

Fig. 7 zeigt einen Ausschnitt einer alternativen Ausführungsform zu Fig. 3, nämlich die Anordnung eines Querträgers 12 an einem seitlichen Wandteil 10 bzw. Führungsprofil 16. Dabei ist der Querträger 12 an einem Zwischenstück 31 befestigt, das an seiner Oberseite eine Gleitschiene 30 trägt, auf der die Förderkette 21 im Bereich zwischen zwei benachbarten Kettenrädern der Querrollen geführt ist. An dem Querträger 12 kann der Abschnitt 25′ der Blechhaube mittels Schrauben befestigt sein, so daß das Antriebssystem zum Zwecke durchzuführender Wartungs- oder Reparaturarbeiten gut zugänglich ist.

Fig. 8 zeigt einen Teil einer Seitenansicht bzw. eines Längsschnitts des Behälters gemäß Fig. 5 und 6. Dabei ruht der Behälter 4 mit der Lauffläche 18 der Raupenkette 17 auf den Querholmen 7 des Regals. Aus der Darstellung in Fig. 8 ist auch ersichtlich, daß zwischen zwei Querrollen 11 ein Querträger 12 angeordnet ist, der gemäß der Darstellung in Fig. 3 zusammen mit den seitlichen Wandteilen 10 das Gerüst des Behälters 4 bildet. Auf dem Zapfen 22 der Welle 19 befindet sich das Kupplungsteil 23, in das die Kupplungsbolzen 24 des Antriebskettenrades 20 eingreifen. Die Förderkette 21 ist über das Antriebskettenrad 20 geführt und verläuft im unteren Bereich über den oberen Umfang der Kettenräder 28. Es ist außerdem eine Spannrolle 32 zum Spannen der Förderkette 21 vorgesehen. Über den äußeren Zahnkranz des Kettenrades 13 ist die Raupenkette 17 gelegt, die über eine höhenverstellbare Spannrolle 33 zur Gleitschiene 26 geführt ist. Durch die spezielle Führung der Förderkette 21 über den oberen Teil der Kettenräder 28 ergibt sich bei einer Fahrbewegung des Behälters 4 in der Zeichnung gesehen nach rechts eine Drehung der Querrollen 11 entgegen dem Uhrzeigersinn, was natürlich voraussetzt, daß die Kupplung zugeschaltet ist. Durch diese gegensinnige Bewegung des Behälters 4 und der Querrollen 11 wird erreicht, daß das im Behälter 4 befindliche Langgut quasi fest verbleibt, d. h. das Langgut bewegt sich nicht relativ zum Regal und wird mittels der Querrollen 11 mit gleicher Geschwindigkeit aus dem Behälter 4 gerollt wie dieser aus dem Regal herausfährt. Das Langgut legt sich somit auf den Querholmen 7 des Regals ab, wie dies bereits zu Fig. 4 beschrieben wurde.

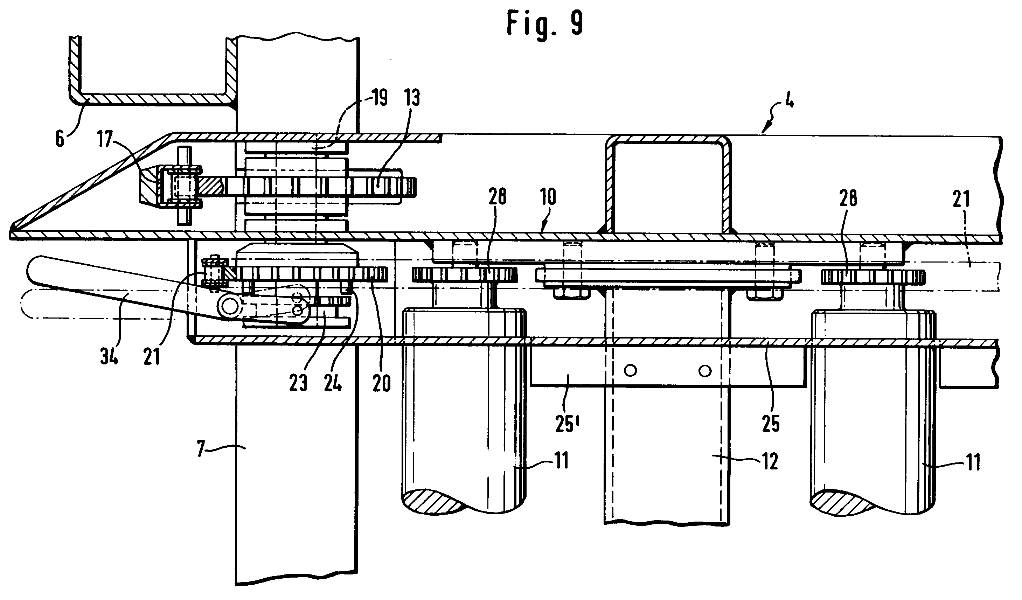

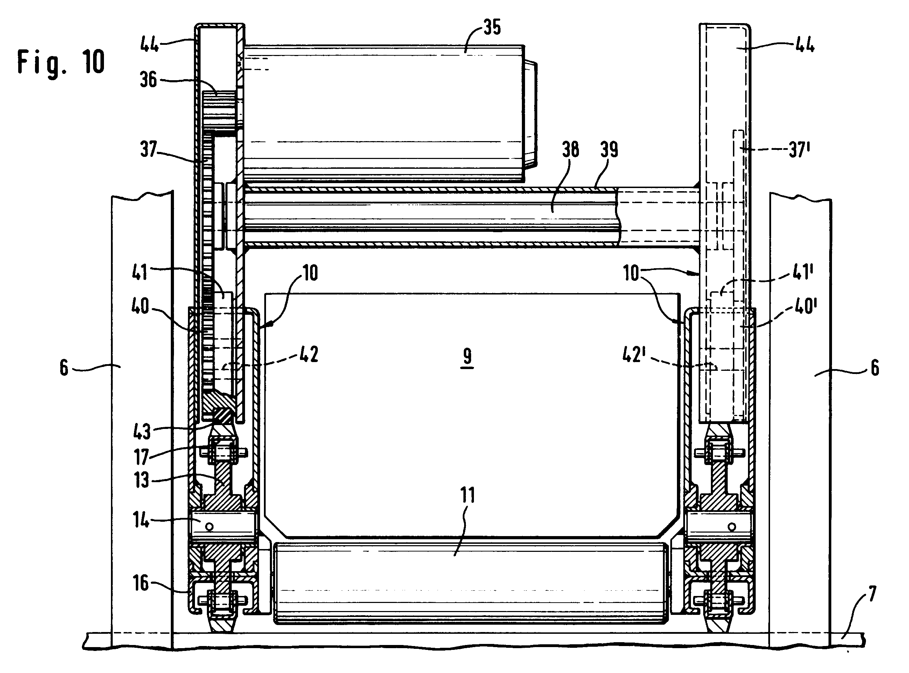

In Fig. 9 ist eine Draufsicht auf einen Teil des Behälters 4 gemäß Fig. 8 gezeigt. Dabei ist mit dem Bezugszeichen 6 wiederum ein vertikaler Ständer und mit 7 ein Querholm des Regals bezeichnet. An dem seitlichen Wandteil 10 ist ein Querträger 12 angeschweißt, der parallel zu Querrollen 11 verläuft. Die Querrollen 11 besitzen Kettenräder 28, über die eine Förderkette 21 gelegt ist. Die Förderkette 21 ist über ein Antriebskettenrad 20 gespannt, das gemeinsam mit einem weiteren Kettenrad 13 und einem Kupplungsteil 23 auf einer Welle 19 gelagert ist. Über das Kettenrad 13 läuft die Raupenkette 17, auf der der Behälter 4 verfahrbar ist. An dem Kupplungsteil 23 ist ein Kupplungshebel 34 angelenkt, durch dessen Betätigung in die gestrichelt dargestellte Position das Kupplungsteil 23 mit den Kupplungsbolzen 24 in Eingriff bringbar ist, wodurch ein Antrieb der Querrollen 11 erfolgt. Wie aus der Darstellung in Fig 9 ersichtlich ist, deckt die Blechhaube 25 den gesamten Bereich des Antriebsmechanismus der Querrollen 11 einschließlich der zugehörigen Kupplung im vorderen Teil der Behälters 4 ab. Fig. 10 zeigt eine Ausführungsvariante der Fig. 2 mit einer am Behälter 4 montierten Antriebsvorrichtung. Die Antriebsvorrichtung umfaßt einen Motor 35, auf dessen Welle ein Zahnritzel 36 befestigt ist, das in ein als Zahnrad ausgeführtes Zwischenrad 37 eingreift. Das Zwischenrad 37 ist auf einer Verbindungswelle 38 befestigt, die in einem Verbindungsrohr 39 zwischen den seitlichen Wandteilen 10 geführt ist. An dem dem Zahnritzel 36 abgewandten Ende der Verbindungswelle 38 ist auf dieser ein zweites Zwischenrad 37′ befestigt, das bezüglich Umfang und Anzahl der Zähne exakt dem ersten Zwischenrad 37, das mit dem Zahnritzel 36 in Eingriff steht, entspricht. Die Zwischenräder 37 und 37′ greifen mit ihren jeweiligen Zahnkränzen in Zahnräder 40 und 40′ ein, die mit Reibrädern 41 und 41′ der Wellen 42 und 42′ verbunden sind. Die Reibräder 41 und 41′ befinden sich in reibschlüssigem Kontakt mit den Raupenketten 17 und übertragen somit die Drehbewegung des Antriebsmotors 35 in entsprechend untersetzter Geschwindigkeit auf die Raupenketten 17. Ein guter Reibschluß zwischen den Raupenketten 17 und den Reibrädern 41 bzw. 41′ wird dadurch erreicht, daß die Reibräder 41 bzw. 41′ mit einem Belag 43 aus Hartgummi versehen sind.

Da die Zwischenräder 37, 37′, Zahnräder 40, 40′ und Reibräder 41, 41′ auf beiden Seiten des Behälters 4 exakt gleich gestaltet sind, erfolgt ein synchroner Antrieb der beiden Raupenketten 17, so daß ein exakter Geradeauslauf des Behälters 4 gewährleistet ist.

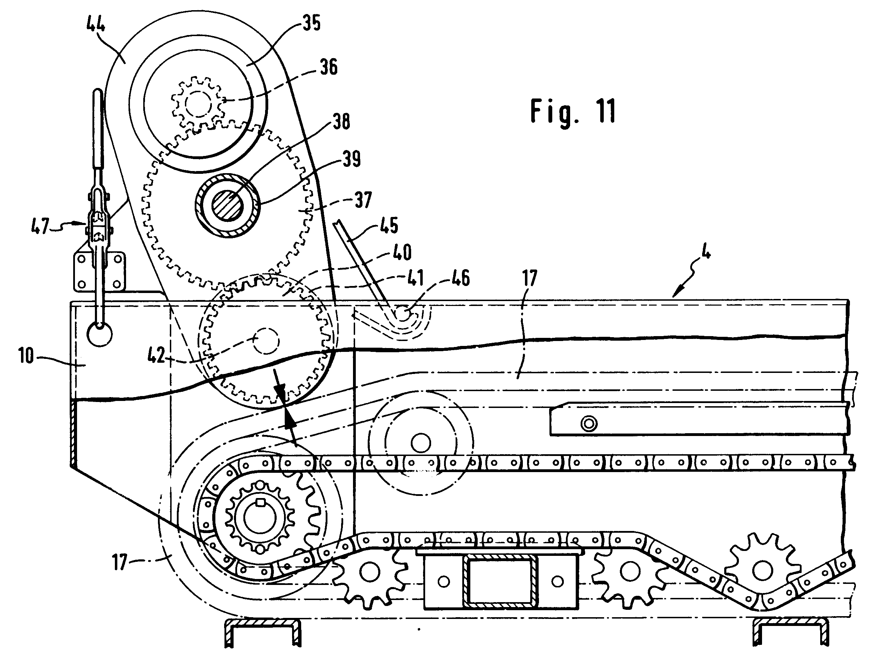

In Fig. 11 ist eine Ansicht des Behälter 4 gemäß Fig. 8 gezeigt, die mit einer Antriebseinrichtung gemäß Fig. 10 ausgerüstet ist. Da der Behälter 4 im wesentlichen mit demjenigen der Fig. 8 übereinstimmt, wird an dieser Stelle lediglich auf die zusätzlich vorgesehene Antriebseinrichtung eingegangen. Die Antriebseinrichtung umfaßt den Motor 35, der beispielsweise ein Elektro- oder Hydromotor oder ein pneumatischer Antrieb sein kann. Der Motor 35 treibt über ein Zahnritzel 36 ein Zwischenrad 37 an, das auf einer Verbindungswelle 38 befestigt ist. Die Verbindungswelle 38 befindet sich in einem Verbindungsrohr 39. Das Zwischenrad 37 greift mit seinem Zahnkranz in ein Zahnrad 40 ein, das mit einem Reibrad 41 auf einer gemeinsamen Welle 42 angeordnet ist. Das Reibrad 41 steht in reibschlüssiger Verbindung mit der Lauffläche der Raupenkette 17. Die gesamte Antriebseinrichtung ist in einem Tragrahmen angeordnet, der seitliche Rahmenteile 44 und das diese verbindende Verbindungsrohr 39 umfaßt. Die Antriebseinrichtung wird mit einem Haken 45 an einem Befestigungsbolzen 46 eingehängt und mittels einer Spannvorrichtung 47 derart gespannt, daß zwischen Reibrad 41 und Raupenkette 17 die erforderliche Reibkraft herrscht.

## Patentansprüche

1. Vorrichtung zur Einlagerung von Langgut, beispielsweise Rohren, Stangen oder dgl. in einem Regal, das eine Vielzahl von Aufnahmeräumen für Langgut umfaßt, mit einem fahrbaren Aufnahmewagen, der von der Stirnseite her in die Aufnahmeräume des Regals mittels einer Antriebseinrichtung einfahrbar ist,
dadurch gekennzeichnet, daß der Aufnahmewagen als wannenartiger, stirnseitig offener Behälter (4) ausgebildet ist, der zum Transport des Langgutes mit Raupenketten (17) ausgerüstet ist, die über endseitige Kettenräder (13) umgelenkt sind, und daß eine Antriebsvorrichtung (35 bis 47) für den fahrbaren Behälter (4) auf dem Behälter selbst angeordnet ist und das Langgut (8) auf Querrollen (11) im Behälter auflagert.

2. Vorrichtung nach Anspruch 1,
dadurch gekennzeichnet, daß die Raupenketten (17) an den Längsseiten des Behälters (4) angeordnet sind, wobei die Kettenräder (13) jeweils in den Endbereichen der Wandteile (10) gelagert sind, und daß zwischen vorderem und hinterem Kettenrad eines Wandteiles (10) Gleitschienen (26, 27) und/oder Führungsrollen für die Raupenketten (17) vorgesehen sind.

3. Vorrichtung nach einem der Ansprüche 1 oder 2,
dadurch gekennzeichnet, daß der untere Abschnitt der Wandteile (10) als nach unten offenes Führungsprofil (16) ausgestaltet ist, aus dem die Raupenkette (17) mit ihrer Lauffläche (18) herausragt.

4. Vorrichtung nach einem der Ansprüche 1 bis 3,
dadurch gekennzeichnet, daß Mittel (37', 38, 40', 41') zum synchronen Antrieb der beiden Raupenketten (17) vorgesehen sind.

5. Vorrichtung nach einem der Ansprüche 1 bis 4,
gekennzeichnet durch eine Kupplungsvorrichtung der Antriebseinrichtung (35 bis 47) mit den Achsen (14) der Kettenräder (13).

6. Vorrichtung nach Anspruch 5,
dadurch gekennzeichnet, daß die Antriebseinrichtung unter Zwischenschaltung von Reibrädern (41, 41') auf die Laufflächen (18) der Raupenketten (17) wirksam ist.

7. Vorrichtung nach einem der Ansprüche 1 bis 6,
dadurch gekennzeichnet, daß ein Schieber (9) vorgesehen ist, der die Querschnittsform des Behälters (4) aufweist und relativ zum Behälter (4) bewegbar ist, derart, daß beim Ausfahren des Behälters (4) aus einem Aufnahmeraum (5) das Langgut (8) auf den Querrollen (11) aus dem Behälter (4) herausrollbar ist.

8. Vorrichtung nach einem der Ansprüche 1 bis 7,
dadurch gekennzeichnet, daß mindestens ein Teil der Gesamtzahl der Querrollen (11) antreibbar ist.

9. Vorrichtung nach Anspruch 8,
dadurch gekennzeichnet, daß die Querrollen (11) jeweils mit Ketten- oder Treibrädern (28) versehen sind, über welche eine Förderkette (21) oder ein Treibriemen gespannt ist.

10. Vorrichtung nach einem der Ansprüche 1 bis 9,
dadurch gekennzeichnet, daß eine an einem der seitlichen Wandteile (10) befestigte Abdeckung (25) vorgesehen ist, welche die Antriebsmittel (21, 28) der Querrollen (11) überdeckt.

11. Vorrichtung nach einem der Ansprüche 8 bis 10,
dadurch gekennzeichnet, daß die Förderkette (21) über ein Antriebskettenrad (20) gespannt ist, das gemeinsam mit einem der Kettenräder (13) der Raupenketten (17) einer Welle (19) gelagert und wahlweise von diesem antreibbar ist.

12. Vorrichtung nach einem der Ansprüche 1 bis 11,
dadurch gekennzeichnet, daß die Drehrichtung der Querrollen (11) entgegengesetzt der Bewegungsrichtung (F) des Behälters (4) ist, wobei die Geschwindigkeit an der Mantelfläche der Querrollen (11) gleich der Geschwindigkeit des Behälters (4) ist.

13. Vorrichtung nach Anspruch 12,
dadurch gekennzeichnet, daß die Kupplung (23, 24) als Klauenkupplung ausgeführt und mit einem Betätigungshebel (34) versehen ist.

## Claims

1. Device for storing elongated articles, for example pipes, bars or the like in shelving, which comprises a plurality of receiving compartments for elongated articles, with a travelling receiving carriage, which can be introduced from the end side into the receiving compartments of the shelving by means of a driving device, characterised in that the receiving carriage is constructed as a trough-like container (4) open on its end face, which for the transportation of the elongated articles is equipped with caterpillar tracks (17), which are guided over chain wheels (13) on the end sides, and that a driving device (35 to 47) for the travelling container (4) is arranged on the container itself and supports the elongated articles (8) on transverse rollers (11) in the container.

2. Device according to Claim 1, characterised in that the caterpillar tracks (17) are disposed on the longitudinal sides of the container (4), the chain wheels (13) being mounted respectively in the end regions of the wall parts (10) and that provided between the front and rear chain wheel of one wall part (10) are sliding rails (26, 27) and/or guide rollers for the caterpillar tracks (17).

3. Device according to one of Claims 1 or 2, characterised in that the lower section of the wall parts (10) is constructed as a guide profile (16) open on the under side, from which the caterpillar track (17) projects by its tread (18).

4. Device according to one of Claims 1 to 3, characterised in that means (37', 38, 40', 41') for the synchronous drive of the two caterpillar tracks (17) are provided.

5. Device according to one of Claims 1 to 4, characterised by a coupling device of the driving device (35 to 47) with the shafts (14) of the chain wheels (13).

6. Device according to Claim 5, characterised in that the driving device acts on the treads (18) of the caterpillar tracks (17) with the interposition of friction wheels (41, 41').

7. Device according to one of Claims 1 to 6, characterised in that a pusher (9) is provided, which has the cross-sectional shape of the container (4) and is able to move relative to the container (4) so that when the container (4) travels out of a receiving compartment (5), the elongated articles (8) are able to roll out of the container (4) on the transverse rollers (11).

8. Device according to one of Claims 1 to 7, characterised in that at least one part of the total number of transverse rollers (11) can be driven.

9. Device according to Claim 8, characterised in that the transverse rollers (11) are provided respectively with chain or drive wheels (28), over which a conveying chain (21) or a drive belt is tensioned.

10. Device according to one of Claims 1 to 9, characterised in that a cover (25) attached to one of the side wall parts (10) is provided, which covers the drive means (21, 28) of the transverse rollers (11).

11. Device according to one of Claims 8 to 10, characterised in that the conveying chain (21) is tensioned over a driving chain wheel (20), which is mounted together with one of the chain wheels (13) of the caterpillar tracks (17) of a shaft (19) and can be driven optionally by the latter.

12. Device according to one of Claims 1 to 11, characterised in that the direction of rotation of the transverse rollers (11) opposes the direction of movement (F) of the container (4), the speed on the surface of the transverse rollers (11) being equal to the speed of the container (4).

13. Device according to Claim 12, characterised in that the cooling (23, 24) is constructed as a claw coupling and is provided with an actuating lever (34).

## Revendications

1. Dispositif pour le stockage d'objets de grande longueur, par exemple de tubes, tiges ou analogues, dans un rayonnage qui comporte une multiplicité d'espaces récepteurs pour les objets de grande longueur, comprenant un chariot récepteur mobile qui peut être introduit par le côté frontal dans les espaces récepteurs du rayonnage au moyen d'un organe d'entraînement,
caractérisé en ce que le chariot récepteur est réalisé sous la forme d'un bac (4) muni de parois et ouvert du côté frontal, qui, pour le transport des objets de grande longueur, est muni de chaînes à chenilles (17), lesquelles sont renvoyées par des roues à chaînes (13) aux extrémités, et en ce qu'un organe d'entraînement (35 à 47) pour le bac mobile (4) est agencé sur le bac lui-même et en ce que le produit de grande longueur (8) est supporté par des rouleaux transversaux (11) dans le bac.

2. Dispositif selon la revendication 1, caractérisé en ce que les chaînes à chenilles (17) sont prévues sur les côtés longitudinaux du bac (4), les roues à chaînes (13) étant disposées chacune dans des régions terminales d'éléments de paroi (10), et en ce que des glissières (26,27) et/ou des rouleaux de guidage pour les chaînes à chenilles (17) sont prévus entre une roue à chaînes antérieure et une roue à chaînes postérieure d'un élément de paroi (10).

3. Dispositif selon l'une des revendications 1 et 2, caractérisé en ce que la section inférieure des éléments de paroi (10) est réalisée sous la forme d'un profil de guidage (16) ouvert vers le bas, à partir duquel les chaînes à chenilles (17) font saillie par leurs surfaces de roulement (18).

4. Dispositif selon l'une des revendications 1 à 3, caractérisé en ce que des moyens (37',38,40',41') sont prévus pour l'entraînement synchronisé des deux chaînes à chenilles (17).

5. Dispositif selon l'une des revendications 1 à 4, caractérisé par un dispositif d'accouplement de l'organe d'entraînement (35 à 47) avec les axes (14) des roues à chaînes (13).

6. Dispositif selon la revendication 5, caractérisé en ce que l'organe d'entraînement agit par l'intermédiaire de roues de friction (41,41') sur les surfaces de roulement (18) des chaînes à chenilles (17).

7. Dispositif selon l'une des revendications 1 à 6, caractérisé en ce qu'il est prévu un tiroir (9) qui a la forme de la section transversale du bac (4) et qui est déplaçable par rapport au bac (4) de telle sorte que, lorsque le bac (4) sort d'un espace de réception (5), l'objet de grande longueur (8) peut être sorti du bac (4) en roulant sur les rouleaux transversaux (11).

8. Dispositif selon l'une des revendications 1 à 7, caractérisé en ce qu'une partie au moins de la totalité des rouleaux transversaux (11) est entraînable.

9. Dispositif selon la revendication 8, caractérisé en ce que les rouleaux transversaux (11) sont munis chacun de roues à chaînes ou de roues d'entraînement (28), autour desquelles une chaîne transporteuse (21) ou une courroie d'entraînement est mise sous tension.

10. Dispositif selon l'une des revendications 1 à 9, caractérisé en ce que sur l'un des éléments de paroi latéraux (10) est prévu un couvercle fixe (25) qui recouvre les moyens d'entraînement (21,28) des rouleaux transversaux (11).

11. Dispositif selon l'une des revendications 8 à 10, caractérisé en ce que la chaîne transporteuse (21) est mise sous tension autour d'une roue à chaîne d'entraînement (20), laquelle est montée conjointement avec une des roues à chaîne (13) des chaînes à chenilles (17) sur un axe (19) et peut être entraînée facultativement par celui-ci.

12. Dispositif selon l'une des revendications 1 à 11, caractérisé en ce que le sens de rotation des rouleaux transversaux (11) est opposé au sens de déplacement (F) du bac (4), la vitesse à la surface de l'enveloppe des rouleaux transversaux (11) étant égale à la vitesse du bac (4).

13. Dispositif selon la revendication 12, caractérisé en ce que l'accouplement (23,24) est un accouplement à griffes et est muni d'un levier d'actionnement (34).
